# FASCICULE DE BREVET EUROPEEN

(11) **EP 2 137 474 B1**
(45) Date de publication et mention de la délivrance du brevet: **16.08.2017**
(21) Numéro de dépôt: 08761919.3
(22) Date de dépôt: 10.01.2008
(51) Int. Cl.: F25J 3/02, C01B 3/50

(54) **PROCEDE ET APPAREIL DE PRODUCTION DE MONOXYDE DE CARBONE PAR DISTILLATION CRYOGENIQUE**
VERFAHREN UND VORRICHTUNG ZUR HERSTELLUNG VON KOHLENMONOXID DURCH KRYOGENE DESTILLATION
METHOD AND APPARATUS FOR PRODUCING CARBON MONOXIDE BY CRYOGENIC DISTILLATION

(30) Priorité: 16.01.2007 FR 0752688
(43) Date de publication de la demande: 30.12.2009
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); COURT, Philippe, F-75020 Paris (FR); HAIK-BERAUD, Natacha, F-94500 Champigny-sur-marne (FR); HERNANDEZ, Antoine, F-94420 Le PLessis Trevise (FR); MONEREAU, Christian, F-75011 Paris (FR)
(74) Mandataire: Mercey, Fiona Susan
(86) Numéro de dépôt international: PCT/FR2008/050046
(87) Numéro de publication internationale: WO 2008/099106

(56) Documents cités:
- EP-A- 1 729 077
- GB-A- 660 113
- JP-A- 63 163 771
- US-A- 4 544 390
- US-A- 6 062 042
- US-A1- 2002 116 944

## Description

La présente invention est relative à un procédé et appareil de production de monoxyde de carbone par distillation cryogénique. conformément aux préambules des revendications 1 et 4 respectivement et connu du document US2002/116944 A1. Les unités de production de monoxyde de carbone et d'hydrogène peuvent être séparées en deux parties :
- ***génération du gaz de synthèse*** (mélange contenant H₂, CO, CH₄, CO₂, Ar et N₂ essentiellement). Parmi les diverses voies industrielles de production de gaz de synthèse, celle à base de gazéification de charbon peut présenter de nombreux avantages quant à ces coûts opératoires et semble se développer de plus en plus notamment dans un pays comme la Chine. La conception de cette unité qui comprend un réacteur de gazéification du charbon avec de l'oxygène est basée sur les productions en monoxyde de carbone (CO) et hydrogène requises.
- ***purification du gaz de synthèse*.**

On retrouve :
- une unité de lavage à un solvant liquide pour éliminer la plus grande partie des gaz acides contenus dans le gaz de synthèse
- une unité d'épuration sur lit d'adsorbants.
- une unité de séparation par voie cryogénique dite boite froide pour la production de CO.

Généralement le gaz de synthèse comprend un mélange à haute pression (autour de 60 bars), et est très enrichi en CO. Un autre avantage du procédé de gazéification au charbon est la faible teneur en inertes (CH₄, Argon et Azote) présents dans le gaz de synthèse à l'entrée de la boite froide pour la production de CO pur.

Ceci permet d'envisager un schéma de procédé pour la boite froide relativement simplifié, la séparation cryogénique se limitant à une séparation entre le CO et l'hydrogène. Les teneurs en inertes dans le gaz de synthèse étant compatibles avec la pureté de CO requise par le client dans la plupart des cas.

Ce schéma ne comprend pas de cycle dédié à la séparation.

De l'hydrogène séparé du CO est requis à haute pression pour pouvoir le valoriser, soit dans un PSA, soit dans une unité de méthanol.

II est donc avantageux de maintenir la pression d'hydrogène en sortie de la boite froide.

Une partie de l'énergie de séparation de la dite boite froide est assurée par détente libre entre le gaz de synthèse et le CO pur produit à basse pression, mais dans la plupart des cas cette détente libre n'est pas suffisante pour boucler le bilan frigorifique de l'unité. Un apport d'azote liquide est nécessaire pour le maintien en froid de la boite froide et boucler le bilan frigorifique.

II est connu de US-A-6266976 d'envoyer un fluide d'azote liquide directement dans la ligne d'échange principale. II n'est apparemment pas connu de mélanger l'azote liquide dans le gaz de tête de la colonne d'épuisement. Or ces deux solutions présentent des inconvénients que cette invention se propose d'améliorer.

L'envoi d'azote liquide à vaporiser directement dans la ligne d'échange risque de fragiliser prématurément la ligne d'échange en aluminium brasée si le débit d'azote liquide (LIN) injecté n'est pas constant.

Les risques sont accentués lors de phases de démarrage ou la mise en froid de l'appareil. L'envoi de LIN directement dans la ligne d'échange, qui ne serait pas refroidie, peut engendrer la fragilisation prématurée de cet échangeur.

L'injection de LIN directement dans la ligne d'échange présente également le risque de solidification des inertes (notamment le CH₄) présent dans les circuits de CO car ce LIN est le fluide le plus froid.

Le mélange de LIN avec le gaz d'épuisement (de « flash») présenterait les mêmes inconvénients que cités précédemment. De plus ces effets néfastes seraient accentués par l'introduction diphasique du gaz de tête de la colonne d'épuisement mélangé avec l'azote liquide dans la ligne échange car on aurait à vaporiser directement dans la ligne échange un mélange liquide-gaz avec une phase liquide riche en azote et une phase gaz riche en hydrogène. Si la composition du mélange n'est pas constante, la température de vaporisation du liquide ne serait pas constante et conduirait à des fluctuations de température au niveau de échangeur et donc à sa fragilisation prématurée.

Selon la présente invention, il est proposé d'injecter cet appoint d'azote liquide pour boucler le bilan frigorifique de l'appareil, en la partie supérieure de la colonne d'épuisement (de « flash»).

Selon un objet de l'invention, il est prévu un procédé de production de monoxyde de carbone par distillation cryogénique dans lequel un mélange contenant au moins du monoxyde de carbone et de l'hydrogène est refroidi, partiellement condensé et envoyé à un séparateur de phases, le liquide du séparateur de phases est envoyé, éventuellement après une deuxième phase de condensation partielle, à une colonne d'épuisement, un liquide riche en monoxyde de carbone est soutiré en cuve de la colonne d'épuisement et un gaz résiduaire est soutiré en tête de la colonne d'épuisement caractérisé en ce qu'au moins une partie des frigories nécessaires au procédé sont fournies par injection d'azote liquide dans la colonne d'épuisement.

Selon d'autres aspects facultatifs :
- l'azote liquide provient d'une source extérieure à l'installation où s'effectue la séparation du mélange contenant au moins du monoxyde de carbone et de l'hydrogène ;
- l'azote liquide est envoyé à un point situé à au moins un plateau théorique au-dessus d'une alimentation de la colonne d'épuisement provenant du séparateur de phase de la phase de condensation partielle du mélange.

Selon un autre aspect de l'invention, il est prévu un appareil de production de monoxyde de carbone par distillation cryogénique comprenant une ligne d'échange dans laquelle un mélange contenant au moins du monoxyde de carbone et de l'hydrogène est refroidi, partiellement condensé, un séparateur de phases, une conduite pour envoyer le mélange partiellement condensé de la ligne d'échange au séparateur de phase, une colonne d'épuisement, une conduite pour envoyer le liquide du séparateur de phases, éventuellement après une deuxième phase de condensation partielle, à la colonne d'épuisement,une conduite pour soutirer un liquide riche en monoxyde de carbone en cuve de la colonne d'épuisement et une conduite pour soutirer un gaz résiduaire en tête de la colonne d'épuisement caractérisé en ce qu'elle comprend une conduite d' injection d'azote liquide pour envoyer l'azote liquide dans la colonne d'épuisement.

Selon d'autres aspects facultatifs :
- la conduite d'injection d'azote liquide est connectée à une source extérieure à l'installation où s'effectue la séparation du mélange contenant au moins du monoxyde de carbone et de l'hydrogène ;
- la conduite d'injection d'azote liquide est connectée à la colonne d'épuisement d'azote liquide est connectée à la colonne d'épuisement à un point situé à au moins un plateau théorique au-dessus d'une alimentation de la colonne d'épuisement provenant du séparateur de phase de la phase de condensation partielle du gaz de synthèse ;
- l'appareil ne comprend pas de turbine ;
- l'azote liquide est envoyé à la colonne d'épuisement sans être refroidi dans la ligne d'échange.

La solution présente le double intérêt suivant :
- diminution du risque de fragilisation de la ligne échange car le LIN est vaporisé directement dans la colonne et le gaz produit sort avec la tête de la colonne d'épuisement (de»flash») et donc on envoie un gaz froid vers la ligne d'échange et non pas un liquide, on limite très fortement le risque de fragilisation de échangeur lors des phases de mise en froid de l'appareil car l'injection de LIN se ferait directement dans une colonne ;
- augmentation du rendement de récupération en CO de l'unité car l'injection de LIN effectue un lavage à l'azote et permet de récupérer plus de CO en phase liquide en cuve de colonne d'épuisement (de « flash») en réduisant ses pertes dans la phase gazeuse.

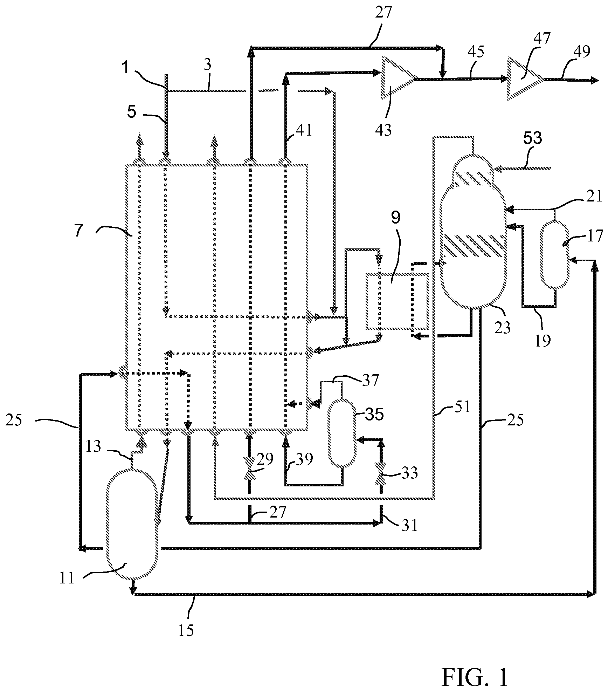

La figure présente un procédé selon l'invention. Un débit de gaz de synthèse 1 est divisé en deux. Une partie 5 à 38°C est envoyé au bout chaud d'une ligne d'échange 7 où il se refroidit jusqu'à une température intermédiaire de -135°C. Refroidi à cette température, il se mélange avec un débit 3 de gaz de synthèse qui n'est pas refroidi dans la ligne d'échange et qui permet de modifier la température du gaz de synthèse à l'entrée de l'échangeur 9. II est important de pouvoir ajuster la chaleur apporté à l'échangeur 9 afin de réguler la teneur en hydrogène dans le liquide de cuve de la colonne d'épuisement. Une partie du gaz de synthèse se refroidit encore dans un échangeur 9 jusqu'à -148°C alors que le reste court-circuite l'échangeur 9, encore dans le but de la régulationde la chaleur à apporter comme rebouillage de la colonne d'épuisement pour régler la teneur en hydrogène en cuve de cette colonne d'épuisement. Les deux débits réunis sont ensuite renvoyés dans la ligne d'échange 7 où le débit mélangé se refroidit jusqu'à -177°C. Ensuite le gaz de synthèse partiellement condensé est envoyé dans un séparateur de phase 11. Le gaz de tête 13, riche en hydrogène, se réchauffe dans la ligne d'échange 7 et sert de produit. Le liquide de cuve 15 est envoyé à un deuxième séparateur de phases 17, dont le débit liquide 19 et le débit gazeux 21 sont envoyés à des niveaux différents à la colonne d'épuisement 23 (de « flash»).

Du liquide de cuve 25 de la colonne d'épuisement 23 est sous-refroidi dans la ligne d'échange et divisé en deux. Un débit 27 est détendu dans une vanne 29 puis se réchauffe dans la ligne d'échange 7. Un autre débit 31 est détendu par une vanne 33, puis envoyé à un séparateur de phases 35 dont le gaz 37 et le liquide 39 sont envoyés à la ligne d'échange 7 pour s'y réchauffer après être mélangés. Le débit mélangé 41 constitue du monoxyde de carbone basse pression et est comprimé dans un compresseur 43 avant d'être mélangé avec le monoxyde de carbone 27. Le débit ainsi formé 45 est comprimé dans un compresseur 47 et sert de produit 49 en tant que monoxyde de carbone haute pression.

En variante, le séparateur de phases 35 peut fonctionner en thermosiphon, ce qui permet une meilleure régulation de la température de refroidissement au bout froid de la ligne d'échange 7.

Le sousrefroidissement du liquide de cuve 25 de la colonne d'épuisement est assuré par l'échangeur 7 chauffé par le débit de gaz de synthèse. Le liquide est refroidi de -168°C à -177°C.

Le gaz de tête 51 de la colonne d'épuisement 23, dit gaz de « flash », est envoyé au bout froid de la ligne d'échange où il se réchauffe.

Des frigories sont fournies à l'installation par injection d'azote liquide 53, provenant d'un appareil de séparation d'air, un appareil d'épuration de gaz naturel contaminé avec de l'azote, un autre appareil de production de monoxyde de carbone dont le gaz d'alimentation contient de l'azote ou de l'appareil lui-même si le gaz d'alimentation contient de l'azote et l'appareil comprend une colonne de déazotation. Le point d'injection de l'azote liquide est situé à au moins un plateau théorique au-dessus de l'alimentation gazeuse de la colonne d'épuisement provenant du séparateur de phase

## Revendications

1. Procédé de production de monoxyde de carbone par distillation cryogénique dans lequel un mélange contenant au moins du monoxyde de carbone et de l'hydrogène est refroidi, partiellement condensé et envoyé à un séparateur de phases (11), le liquide (15) du séparateur de phases est envoyé, éventuellement après une deuxième phase de condensation partielle, à une colonne d'épuisement (23), un liquide riche en monoxyde de carbone (25) est soutiré en cuve de la colonne d'épuisement et un gaz résiduaire (51) est soutiré en tête de la colonne d'épuisement **caractérisé en ce qu'**au moins une partie des frigories nécessaires au procédé sont fournies par injection d'azote liquide (53) dans la colonne d'épuisement.

2. Procédé selon la revendication 1 dans lequel l'azote liquide (53) provient d'une source extérieure à l'installation où s'effectue la séparation du mélange contenant au moins du monoxyde de carbone et de l'hydrogène.

3. Procédé selon l'une des revendications 1 ou 2 dans lequel l'azote liquide (53) est envoyé à un point situé à au moins un plateau théorique au-dessus d'une alimentation de la colonne d'épuisement (23) provenant du séparateur de phases (11) de la phase de condensation partielle du mélange.

4. Appareil de production de monoxyde de carbone par distillation cryogénique comprenant une ligne d'échange (7) dans laquelle un mélange contenant au moins du monoxyde de carbone et de l'hydrogène est refroidi, partiellement condensé, un séparateur de phases (11), une conduite pour envoyer le mélange partiellement condensé de la ligne d'échange au séparateur de phase, une colonne d'épuisement (23), une conduite pour envoyer le liquide (15) du séparateur de phases, éventuellement après une deuxième phase de condensation partielle, à la colonne d'épuisement, une conduite pour soutirer un liquide (25) riche en monoxyde de carbone en cuve de la colonne d'épuisement et une conduite (51) pour soutirer un gaz résiduaire en tête de la colonne d'épuisement **caractérisé en ce qu'**elle comprend une conduite d' injection d'azote liquide (53) pour envoyer l'azote liquide dans la colonne d'épuisement.

5. Appareil selon la revendication 4 dans lequel la conduite d'injection d'azote liquide (53) est connectée à une source extérieure à l'installation où s'effectue la séparation du mélange contenant au moins du monoxyde de carbone et de l'hydrogène.

6. Appareil selon l'une des revendications 4 ou dans lequel la conduite d'injection d'azote liquide (53) est connectée à la colonne d'épuisement à un point situé à au moins un plateau théorique au-dessus d'une alimentation de la colonne d'épuisement provenant du séparateur de phase de la phase de condensation partielle du gaz de synthèse.

7. Appareil selon l'une des revendications 4 à 6 dans lequel l'azote liquide (53) est envoyé à la colonne d'épuisement (23) sans être refroidi dans la ligne d'échange (7).

## Patentansprüche

1. Verfahren zur Herstellung von Kohlenmonoxid durch kryogene Destillation, wobei ein mindestens Kohlenmonoxid und Wasserstoff enthaltendes Gemisch gekühlt, teilweise kondensiert und einem Phasentrenner (11) zugeführt wird, die Flüssigkeit (15) aus dem Phasentrenner, gegebenenfalls nach einer zweiten Phase der teilweisen Kondensation, einer Abstreifkolonne (23) zugeführt wird, eine kohlenmonoxidreiche Flüssigkeit (25) am Sumpf der Abstreifkolonne abgezogen wird und ein Restgas (51) am Kopf der Abstreifkolonne abgezogen wird, **dadurch gekennzeichnet, dass** mindestens ein Teil der für das Verfahren notwendigen Kälteerzeugung durch Einspritzung von flüssigem Stickstoff (53) in die Abstreifkolonne bereitgestellt wird.

2. Verfahren nach Anspruch 1, wobei der flüssige Stickstoff (53) aus einer Quelle außerhalb der Anlage stammt, in der die Trennung des mindestens Kohlenmonoxid und Wasserstoff enthaltenden Gemisches abläuft.

3. Verfahren nach einem der Ansprüche 1 oder 2, wobei der flüssige Stickstoff (53) an einem Punkt zugeführt wird, der an mindestens einem theoretischen Boden oberhalb einer Bespeisung der Abstreifkolonne (23) liegt, die vom Phasentrenner (11) aus der Phase der teilweisen Kondensation des Gemisches herstammt.

4. Vorrichtung zur Herstellung von Kohlenmonoxid durch kryogene Destillation, umfassend eine Austauschleitung (7), in der ein mindestens Kohlenmonoxid und Wasserstoff enthaltendes Gemisch gekühlt und teilweise kondensiert wird, einen Phasentrenner (11), eine Leitung, um das teilweise kondensierte Gemisch aus der Austauschleitung dem Phasentrenner zuzuführen, eine Abstreifkolonne (23), eine Leitung, um die Flüssigkeit (15) aus dem Phasentrenner, gegebenenfalls nach einer zweiten Phase der teilweisen Kondensation, der Abstreifkolonne zuzuführen, eine Leitung, um eine kohlenmonoxidreiche Flüssigkeit (25) am Sumpf der Abstreifkolonne abzuziehen, und eine Leitung (51), um ein Restgas am Kopf der Abstreifkolonne abzuziehen, **dadurch gekennzeichnet, dass** sie eine Leitung zum Einspritzen von flüssigem Stickstoff (53) umfasst, um den flüssigen Stickstoff in die Abstreifkolonne zuzuführen.

5. Vorrichtung nach Anspruch 4, wobei die Leitung zum Einspritzen von flüssigem Stickstoff (53) an eine Quelle außerhalb der Anlage angeschlossen ist, in der die Trennung des mindestens Kohlenmonoxid und Wasserstoff enthaltenden Gemisches abläuft.

6. Vorrichtung nach einem der Ansprüche 4 oder 5, wobei die Leitung zum Einspritzen von flüssigem Stickstoff (53) an einem Punkt an die Abstreifkolonne angeschlossen ist, der an mindestens einem theoretischen Boden oberhalb einer Bespeisung der Abstreifkolonne liegt, die vom Phasentrenner aus der Phase der teilweisen Kondensation des Synthesegases herstammt.

7. Vorrichtung nach einem der Ansprüche 4 bis 6, wobei der flüssige Stickstoff (53) der Abstreifkolonne (23) zugeführt wird, ohne in der Austauschleitung (7) gekühlt zu werden.

## Claims

1. Method for producing carbon monoxide by cryogenic distillation in which a mixture containing at least carbon monoxide and hydrogen is cooled, partially condensed and sent to a phase separator (11), the liquid (15) from the phase separator is sent, possibly after a second phase of partial condensation, to a stripping column (23), a carbon-monoxide-rich liquid (25) is withdrawn from the bottom of the stripping column and a waste gas (51) is withdrawn from the top of the stripping column, **characterised in that** at least a portion of the refrigeration required by the method is provided by injecting liquid nitrogen (53) into the stripping column.

2. Method according to claim 1, wherein the liquid nitrogen (53) originates from a source outside the installation where the separation of the mixture containing at least carbon monoxide and hydrogen is carried out.

3. Method according to any one of claims 1 or 2, wherein the liquid nitrogen (53) is sent to a point located at at least one theoretical plate above a feed for the stripping column (23) originating from the phase separator (11) of the partial condensation phase of the mixture.

4. Apparatus for producing carbon monoxide by cryogenic distillation comprising an exchange line (7) in which a mixture containing at least carbon monoxide and hydrogen is cooled, partially condensed, a phase separator (11), a line for sending the partially condensed mixture of the exchange line to the phase separator, a stripping column (23), a line for sending the liquid (15) of the phase separator, possibly after a second phase of partial condensation, to the striping column, a line for withdrawing a carbon-monoxide-rich liquid (25) from the bottom of the stripping column and a line (51) a line for withdrawing a waste gas from the top of the stripping column, **characterised in that** it comprises a line for injecting liquid nitrogen (53) for sending the liquid nitrogen into the stripping column.

5. Apparatus according to claim 4 in which the injection line of liquid nitrogen (53) is connected to a source outside the installation where the separation of the mixture containing at least carbon monoxide and hydrogen is carried out.

6. Apparatus according to any one of claims 4 or 5 in which the injection line for liquid nitrogen (53) is connected to the stripping column at a point located at at least one theoretical plate above a feed for the stripping column originating from the phase separator for separating the partial condensation phase from the synthetic gas.

7. Apparatus according to any one of claims 4 to 6 in which the liquid nitrogen (53) is sent to the stripping column (23) without being cooled in the exchange line (7).
